Europäisches Patentamt

European Patent Office

Office européen des brevets

(11) Veröffentlichungsnummer: **0 283 887**

**A1**

# EUROPÄISCHE PATENTANMELDUNG

(21) Anmeldenummer: **88103987.9**

(51) Int. Cl.4 **G01N 31/16**

(22) Anmeldetag: **14.03.88**

(30) Priorität: **20.03.87 CH 1082/87**

(43) Veröffentlichungstag der Anmeldung:
**28.09.88 Patentblatt 88/39**

(84) Benannte Vertragsstaaten:
**AT BE DE ES FR GB IT NL SE**

(71) Anmelder: **ZELLWEGER USTER AG**
**Wilstrasse 11**
**CH-8610 Uster(CH)**

(72) Erfinder: **Hoerler, Daniel**
**Gottheifstrasse 6**
**CH-8640 Rapperswil(CH)**
Erfinder: **Robertson, Peter Murday, Dr.**
**Haldenstrasse 9**
**CH-8185 Winkel b. Bülach(CH)**
Erfinder: **Suter, Erwin**
**Vogelsangstrasse 23**
**CH-8006 Zürich(CH)**

(54) Titrationsverfahren zur chemischen Analyse einer Probe und Vorrichtung zur Durchführung des Titrationsverfahrens.

(57) Die Probe und das Reagens werden in einem Titriergefäss kontinuierlich gemischt und die zugeführten Mengen von Probe und Reagens werden gemessen. Diese Messung erfolgt anhand einer Bestimmung des Gewichts des Inhalts des Titriergefässes (1).

Diese Gewichtsbestimmung kann mittels einer einzigen Waage (15) erfolgen, wodurch das Titrationsverfahren einfach und kostengünstig automatisiert und dadurch auch unter labormässigen Bedingungen angewendet werden kann.

## Titrationsverfahren zur chemischen Analyse einer Probe und Vorrichtung zur Durchführung des Titrationsverfahrens

Unter Titration versteht man bekanntlich die Ermittlung des unbekannten Gehalts der wässerigen Lösung einer Säure oder Base (Probe) durch Zusatz von Base-bzw. Säurelösung (Reagens) bekannter Konzentration bis zum Umschlagen eines Indikators. Aus Kubikzentimeter-Anzahl und Konzentration (Titer) der verbrauchten Base oder Säure lässt sich dann ohne weiteres des Säure-bzw. Basegehalt der auf diese Weise titrierten Lösung errechnen.

Die gesuchte Konzentration CS der Probe ist dabei durch die Gleichung

CS = CR . VR/VS

bestimmt, wobei CR die Konzentration (in Mol/Liter) des Reagens bezeichnet und VR das Volumen an Reagens, das für das Erreichen des Endpunkts oder Aequivalenzpunkts der Titration eines bestimmten Probenvolumens VS erforderlich ist.

Wenn eine Titration unter labormässigen Bedingungen durchgeführt wird, dann ist der Grad an Automation nicht sehr hoch. Er ist üblicherweise auf die Zufuhr des Reagensmittels einer motorisch angetriebenen und ein elektrisches Ventil zur Erleichterung des Nachfüllens aufweisenden Bürette beschränkt. Ausserdem ist bei der labormässigen automatischen Titration ein Mittel zur Ueberwachung des Verlaufs der Titration vorzusehen. Bekannte Mittel dieser Art basieren auf potentiometrischen Verfahren (Glaselektrode für pH-Wert; ionenselektive Elektrode für andere an der Reaktion während der Titration beteiligte ionische Komponenten; Elektrode für Redox-Potential für den Fall, dass die Reaktion eine Oxidation oder eine Reduktion ist) oder auf anderen Methoden, wie beispielsweise Messung der Leitfähigkeit oder der Wärmetönung (Kalorimetrie).

Die Probenzufuhr erfolgt bei der labormässigen Titration in der Regel nicht automatisch, weil für die gesteuerte Zufuhr von Probe und Reagens zum Titriergefäss mindestens zwei steuerbare Pumpen mit einer aufwendigen Regelung erforderlich sind. Wenn mehrere Proben untersucht werden sollen, dann ist ausserdem eine entsprechende Anzahl motorisch angetriebener Büretten für die Zufuhr der verschiedenen Reagentien erforderlich. Es liegt auf der Hand, dass eine derartige automatische Titrationseinrichtung mit verschiedenen Büretten und deren motorischen Antrieben, mit elektrischen Dreiweg-Ventilen und mit der erforderlichen Steuerelektronik sehr komplex und aufwendig und daher für einen Einsatz im Labor zu teuer ist.

Die Erfindung betrifft ein Titrationsverfahren zur chemischen Analyse einer Probe, bei welchem die Probe und ein Reagens in einem Titriergefäss kontinuierlich gemischt und deren zugeführte Mengen gemessen werden, und mittels eines geeigneten Sensors die Ermittlung des Aequivalenzpunktes erfolgt. Das erfindungsgemässe Titrationsverfahren soll auf einfache Weise eine automatische, im Labor anwendbare Titration mit einem einzigen Reagens oder mit einer Mehrzahl von Reagentien ermöglichen und es soll so konzipiert sein, dass zur Bestimmung der Zuführmengen von Probe und Reagens eine einzige Messanordnung ausreicht.

Diese Aufgabe wird erfindungsgemäss dadurch gelöst, dass die Messung der zugeführten Mengen von Probe und Reagens durch Bestimmung des jeweiligen Gewichts des Titriergefässes erfolgt.

Durch die erfindungsgemässe Bestimmung des Gewichts des Titriergefässes mit und ohne Inhalt können die Zuführmengen von Probe und Reagens mittels einer einzigen Waage gemessen werden, was eine Automatisierung von Titrationsverfahren auch für labormässige Bedingungen ermöglicht. Die auf diese Weise bestimmten Konzentrationen liegen dann zwar in der Einheit der Molalität vor, das ist in Mol Substanz pro Kilogramm Lösungsmittel, aber die Molarität kann daraus einfach abgeleitet werden, und dieser abgeleitete Wert unterscheidet sich von dem bei einer üblichen Titration direkt gewonnenen Wert in den meisten Fällen praktisch nicht.

Die Erfindung betrifft weiter eine Vorrichtung zur Durchführung des genannten Titrationsverfahrens, mit einem einen Sensor enthaltenden Titriergefäss und mit an dieses führenden Zuführleitungen für Probe und Reagens.

Die erfindungsgemässe Vorrichtung ist gekennzeichnet durch eine Wägeeinrichtung zur Bestimmung des Gewichts des Titriergefässes.

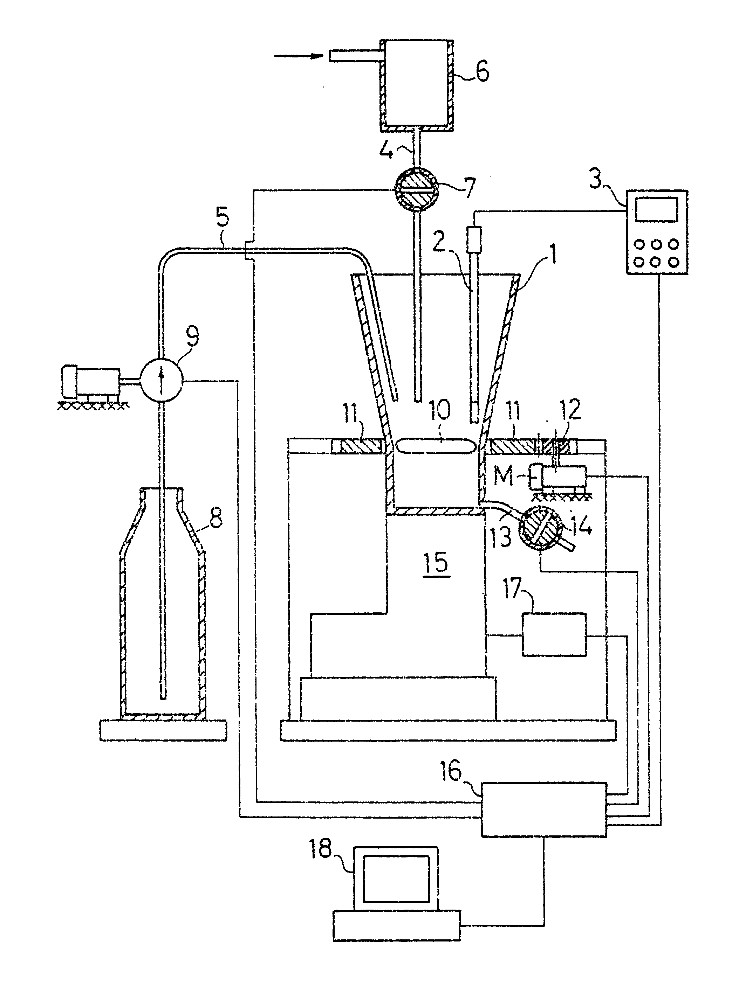

Nachstehend wird die Erfindung anhand eines in der einzigen Zeichnung dargestellten Ausführungsbeispiels näher erläutert.

Die schematisch dargestellte Titrationsapparatur weist darstellungsgemäss ein Titriergefäss 1 mit einem Sensor 2 zur Bestimmung des Aequivalenzpunktes einer titrierten Probe auf. Der Sensor 2 ist mit einem Anzeigeinstrument 3 verbunden, und in das Titriergefäss 1 münden zwei Leitungen 4 und 5 für die Zuführung von Probe bzw. Reagens. Die Probenleitung 4 zweigt von einem Probenreservoir 6 ab, von welchem die Probe dem Titriergefäss 1 durch die Wirkung der Schwerkraft und gesteuert durch ein elektrisch betätigbares Ventil 7 zugeführt wird. Die Reagensleitung 5 zweigt von einem Reagensreservoir 8 ab und enthält eine gesteuerte Pumpe 9, beispielsweise eine peristaltische Pumpe oder eine Membranpumpe, zur Förderung von Reagens aus dem Reservoir 8 in das Titriergefäss 1. Die Pumpe 9 enthält in der Regel auch ein elektrisch betätigbares Ventil (nicht eingezeichnet), welches beim Ein-oder Ausschalten der Pumpe 9 entsprechend betätigt wird.

Selbstverständlich könnte auch die Leitung 4 für das Reagens und die Leitung 5 für die Probe verwendet werden oder es könnten auch zwei Leitungen mit gleichem Fördersystem (Schwerkraft oder Pumpe) vorgesehen sein. Derartige Modifikationen liegen im Verständnis des Fachmanns.

Im Titriergefäss 1 hat eine gute Durchmischung von Probe und Reagens zu erfolgen, wozu eine entsprechende Hilfseinrichtung vorgesehen ist. Diese ist beispielsweise durch einen Rührer 10 gebildet, welcher durch ein geeignetes Antriebsmittel, beispielsweise einen Antriebsmagneten betätigbar ist. Der letztere ist durch unmittelbar die Aussenwand des Titriergefässes 1 umgebende Erregerspulen oder, so wie in der Figur angedeutet, durch eine Magnetanordnung in Rotation versetzbar. Die Magnetanordnung besteht aus in oder auf einem das Titriergefäss 1 umfassenden Zahnrad 11 kreisförmig angeordneten Magneten (nicht dargestellt). Das diese Magnete tragende Zahnrad 11 ist durch ein mit einem Motor M verbundenes Ritzel 12 antreibbar.

Der Sensor 2 ist ein Sensor bekannter Bauart, beispielsweise eine pH-Elektrode, für den Fall, dass bei der Titration eine Aenderung des pH-Wertes (Neutralisation) erfolgt, oder ein photometrischer, thermischer oder ein anderer geeigneter Sensor.

Das Titriergefäss 1 besitzt eine Ablaufleitung 13 mit einem ebenfalls elektrisch betätigbaren Ventil 14 zur Entleerung des Titriergefässes 1 nach Beendigung der Titration. Das Titriergefäss 1 mit der Ablaufleitung 13 und dem Ventil 14 ist auf einer Wägeeinrichtung 15 (Waage, Kraftmessdose oder dergleichen) angeordnet, mit welcher jeweils das Gewicht des Titriergefässes 1 mit oder ohne Inhalt (Probe, Reagens) gemessen wird.

Die Ventile 7 und 14, die Pumpe 9 und das eventuell bei der Pumpe 9 vorhandene Reagensventil sind mit einer Steuerstufe 16 verbunden, welche unter anderem einen A/D-Wandler sowie verschiedene Relais enthält. Das Anzeigeinstrument 3 des Sensors 2, der das Ritzel 12 und damit über das Zahnrad 11 mit der Magnetanordnung den Rührer 10 antreibende Motor M und die Wägeeinrichtung 15 sind ebenfalls mit der Steuerstufe 16 verbunden. Die Wägeeinrichtung 15 ist beispielsweise eine elektronische Waage und liefert ein dem gemessenen Gewicht entsprechendes elektrisches Signal, was in der Figur durch eine Stufe 17 symbolisiert ist

Von der Steuerstufe 16 werden einerseits die Ausgangssignale des Sensors 2 und der Wägeeinrichtung 15 digitalisiert und an einen Rechner 18, beispielsweise einen Personal Computer, weitergeleitet, und anderseits werden anhand entsprechender Signale des Rechners 18 die Relais für die Ventile 7 und 14 und für das eventuell vorhandene Reagensventil, für den Motor M und für die Pumpe 9 geschaltet.

Der in die Probe eintauchende Sensor 2 und die möglicherweise eintauchenden Leitungen 4 und 5 beeinflussen durch den Auftrieb das zu messende Gewicht der Probe. Mit dem Rechner 18 ist jedoch eine entsprechende Korrektur möglich. Alle übrigen Apparateteile sind so angeordnet, dass die Wägeeinrichtung 15 nicht beeinflusst wird.

Ein typischer Titrationsprozess mit der beschriebenen Vorrichtung läuft folgendermassen ab:

## A. Reinigung

1. Messung des Leergewichts (M1) des Titriergefässes 1.

2. Oeffnen Reinigungsventil, Einschalten der Pumpe zur Förderung von Reinigungswasser (Ventil und Pumpe nicht eingezeichnet).

3. Fortlaufende Messung des Gewichts des Titriergefässes 1 und Abschalten der Zufuhr von Reinigungswasser, sobald das dem mit der gewünschten Menge von Reinigungswasser gefüllten Titriergefäss 1 entsprechende Gewicht erreicht ist.

4. Einige Zeit warten.

5. Oeffnen des Auslaufventils 14.

## B. Titration

6. Auslaufventil 14 schliessen.

7. Messung des Leergewichts (M1) des Titriergefässes 1.

8. Oeffnen des Probenventils 7.

9. Fortlaufende Messung des Gewichts des Titriergefässes 1 und Schliessen des Probenventils 7, sobald die gewünschte Menge der Probe in das Titriergefäss 1 eingefüllt ist (entsprechendes Gewicht M2).

10. Oeffnen des Reagensventils und/oder Einschalten der Pumpe 9.

11. Starten des Motors M.

12. Fortlaufende Messung des Grades der Titration mit dem Sensor 2.

13. Bei Erreichen des Aequivalenzpunktes (Endpunktes) der Titration - Schliessen des Reagensventils und/oder Abstellen der Pumpe 9 sowie Abstellen des Motors M.

14. Messung des Gewichts (M3) des Probe und Reagens enthaltenden Titriergefässes 1.

Wenn mR die bekannte Molalität ( = mol/kg) des Reagens bezeichnet, dann lässt sich daraus und aus den Gewichtswerten M1, M2 und M3 die gesuchte Molalität mS der Probe wie folgt annähernd berechnen:

$$mS = mR \cdot (M3-M2) \cdot (M2-M1).$$

Bei dem soeben beschriebenen Beispiel wird die Titration bis zum Erreichen des Aequivalenzpunkts durchgeführt. Wenn die Signale des Sensors 2 und der Wägeeinrichtung 15 kontinuierlich aufgezeichnet werden, dann kann die zugeführte Probenmenge beim Aequivalenzpunkt aus diesen aufgezeichneten Werten auch bei einer über den Aequivalenzpunkt hinaus andauernden Titration interpoliert werden.

## Ansprüche

1. Titrationsverfahren zur chemischen Analyse einer Probe, bei welchem die Probe und ein Reagens in einem Titriergefäss kontinuierlich gemischt und die zugeführten Mengen von Probe und Reagens gemessen werden und mittels eines geeigneten Sensors die Ermittlung des Aequivalenzpunktes erfolgt, dadurch gekennzeichnet, dass die Messung der zugeführten Mengen von Probe und Reagens durch Bestimmung des jeweiligen Gewichts des Titriergefässes (1) erfolgt.

2. Titrationsverfahren nach Anspruch 1, dadurch gekennzeichnet, dass zu Beginn der Titration das Gewicht des leeren Titriergefässes (1) gemessen und anschliessend eine vorbestimmte Menge Reagens zugeführt und dessen Zuführung bei Erreichen des entsprechenden Gewichts gestoppt wird, dass anschliessend die Probe zugeführt und deren Gewicht beim Erreichen des Aequivalenzpunktes bestimmt wird, und dass aus den Gewichtswerten und aus der bekannten Konzentration des Reagens die Konzentration der Probe bestimmt wird.

3. Titrationsverfahren nach Anspruch 2, dadurch gekennzeichnet, dass jeweils das Gewicht des Titriergefässes (1), und zwar dasjenige zu Beginn der Titration, dasjenige beim Stoppen der Zufuhr von Reagens und dasjenige beim Aequivalenzpunkt gemessen oder ermittelt wird, und dass die Gewichte von Reagens und Probe durch Differenzbildung bestimmt werden.

4. Titrationsverfahren nach Anspruch 1, dadurch gekennzeichnet, dass die Zuführung von Probe und/oder Reagens in das Titriergefäss (1) durch die Wirkung der Schwerkraft erfolgt.

5. Titrationsverfahren nach Anspruch 3 oder 4, dadurch gekennzeichnet, dass die Zufuhr der Probe beim Aequivalenzpunkt unterbrochen wird.

6. Titrationsverfahren nach Anspruch 3 oder 4, dadurch gekennzeichnet, dass bei der Zufuhr der Probe das Ausgangssignal des Sensors (2) und das Gewicht des Titriergefässes (1) fortlaufend aufgezeichnet werden, so dass bei einer über den Aequivalenzpunkt hinaus andauernden Zufuhr von Probe deren Gewicht beim Aequivalenzpunkt durch Interpolation bestimmt werden kann.

7. Vorrichtung zur Durchführung des Titrationsverfahrens nach Anspruch 1, mit einem einen Sensor enthaltenden Titriergefäss und mit an dieses führenden Zuführleitungen für Probe und Reagens, gekennzeichnet durch eine Wägeeinrichtung (15) zur Bestimmung des Gewichts des Titriergefässes (1).

8. Vorrichtung nach Anspruch 7, dadurch gekennzeichnet, dass die Wägeeinrichtung (15) durch eine elektronische Waage oder eine Kraftmessdose gebildet ist.

9. Vorrichtung nach Anspruch 8, gekennzeichnet durch eine Steuerstufe (16) an welche die Wägeeinrichtung (15) und der Sensor (2) angeschlossen sind.

10. Vorrichtung nach Anspruch 9, dadurch gekennzeichnet, dass die Zufuhrleitungen (4, 5) für Probe und Reagens elektrisch betätigbare Ventile (7) und/oder steuerbare Fördermittel (9) für die jeweilige Flüssigkeit enthalten.

11. Vorrichtung nach Anspruch 10, dadurch gekennzeichnet, dass die genannten Ventile (7) und/oder Fördermittel (9) an die Steuerstufe (16) angeschlossen sind, welche Relais zur Betätigung dieser Ventile bzw. Fördermittel enthält.

12. Vorrichtung nach Anspruch 11, dadurch gekennzeichnet, dass die Steuerstufe (16) einen Analog/Digital-Wandler enthält und an einen Rechner (18) angeschlossen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 447 906  (F.H. ZIMMERLI) <br> * Spalte 1, Zeile 14 - Spalte 7, Zeile 30; Abbildung 2 * | 1-5,7 | G 01 N  31/16 |
| Y | | 8-11 | |
| A | | 6,12 | |
| | --- | | |
| Y | ANALYTICAL CHEMISTRY, vol. 56, no. 3, März 1984, Seiten 586-589, Easton, Pennsylvania, US; B. KRATOCHVIL et al.: "Computer-controlled weight titrator based on a force-compensation balance" * ganzes Dokument * | 8-11 | |
| | --- | | |
| A | | 1-7,12 | |
| | --- | | |
| Y | FR-A-1 446 690  (MEPAG A.G.) * ganzes Dokument * | 1-3,5,7 | |
| | --- | | |
| Y | ANALYTICAL CHEMISTRY, vol. 50, no. 14, Dezember 1978, Seiten 2090-2096, Easton, Pennsylvania, US; A.H.B. WU et al.: "Versatile microcomputer-controlled titrator". * Zusammenfassung; Seiten 2090-2092; Abbildung 4 * | 1-3,5,7 | RECHERCHIERTE SACHGEBIETE (Int. Cl.4)  G 01 N  31/16 |
| | --- | | |
| A | | 6,8-12 | |
| | --- | | |
| A | ANALYTICAL CHEMISTRY, Band 50, Nr. 13, November 1978, Easton, Pennsylvania, US; S. GUEVREMONT et al.: "Automatic gravimetric titration system" * ganzes Dokument * | 1-12 | |
| | ----- | | |

Der vorliegende Recherchenbericht wurde für alle Patentansprüche erstellt

| Recherchenort | Abschlußdatum der Recherche | Prüfer |
|---|---|---|
| BERLIN | 13-06-1988 | MOUTARD P.J. |